(19) **Europäisches Patentamt**

**European Patent Office**

**Office européen des brevets**

(11) **EP 1 242 553 B1**

(12) **FASCICULE DE BREVET EUROPEEN**

(45) Date de publication et mention
de la délivrance du brevet:
**10.05.2006 Bulletin 2006/19**

(51) Int Cl.:
*C09J 7/02* *(2006.01)*     *C09D 183/04* *(2006.01)*

(21) Numéro de dépôt: **00985325.0**

(22) Date de dépôt: **24.11.2000**

(86) Numéro de dépôt international:
**PCT/FR2000/003294**

(87) Numéro de publication internationale:
**WO 2001/038451 (31.05.2001 Gazette 2001/22)**

(54) **UTILISATION D' UN ADDITIF DE REGULATION DE LA FORCE DE DECOLLEMENT D' UNE INTERFACE SILICONE/ADHESIF DANS UN COMPLEXE SILICONE RETICULABLE THERMIQUEMENT/ADHESIF**

VERWENDUNG EINES ZUSATZSTOFFES ZUR MODULIERUNG DER TRENNKRAFT AN DER SCHNITTSTELLE EINES KOMPLEXES AUS THERMISCH VERNETZBARER SILIKONVERBINDUNG UND KLEBSTOFF

USE OF AN ADDITIVE FOR REGULATING THE SILICONE/ADHESIVE RELEASE FORCE AT THE INTERFACE OF A HEAT-CURABLE SILICONE/ADHESIVE COMPLEX

(84) Etats contractants désignés:
**AT BE CH CY DE DK ES FI FR GB GR IE IT LI LU MC NL PT SE TR**

(30) Priorité: **26.11.1999 FR 9914945**

(43) Date de publication de la demande:
**25.09.2002 Bulletin 2002/39**

(73) Titulaire: **RHODIA CHIMIE**
**92512 Boulogne Billancourt Cedex (FR)**

(72) Inventeurs:
• **DHALER, Didier**
**F-69160 Tassin (FR)**

• **LIEVRE, André**
**F-69230 Saint-Genis-Laval (FR)**
• **MIROU, Christian**
**F-69005 Lyon (FR)**
• **GUYOT, Christophe**
**F-69005 Lyon (FR)**

(74) Mandataire: **Kling, Simone et al**
**Cabinet Lavoix**
**2, place d'Estienne d'Orves**
**75441 Paris Cedex 09 (FR)**

(56) Documents cités:
**EP-A- 0 601 938**     **WO-A-96/05962**
**DE-A- 19 831 775**     **US-A- 4 526 953**

**EP 1 242 553 B1**

**Description**

La présente invention concerne d'une manière générale des complexes dits « autocollants » composés notamment d'une matrice silicone anti-adhésive et d'un revêtement adhésif.

Ce type de complexe est généralement destiné à un usage dans lequel la matrice silicone réticulée ou polymérisée est apposée au niveau d'un support de manière à le rendre anti-adhérent vis-à-vis de l'adhésif. Ce type de complexes trouve notamment des applications dans le domaine des papiers protecteurs adhésifs, étiquettes et papiers décoratifs.

Les huiles ou résines silicones proposées pour obtenir ce type de revêtement à propriétés anti-adhérentes dérivent généralement de systèmes photoréticulables cationiques. Il s'agit plus particulièrement de monomère(s), oligomère(s) et/ou polymère(s) de nature polyorganosiloxane comprenant des radicaux fonctionnels et réactifs aptes à former des pontages intra- et inter- caténaires. Ces systèmes conduisent après polymérisation sous UV ou faisceau d'électrons et en présence d'un amorceur de polymérisation, à des revêtements anti-adhérents qui forment des complexes dits « autocollants » avec les adhésifs que l'on applique à leur surface en ligne ou après siliconage.

Une propriété essentielle de ces complexes silicone/adhésif est donc de se prêter à un décollement aisé de l'adhésif du revêtement silicone lors de leur utilisation.

Selon la nature des applications envisagées pour ce type de complexe, il est souhaitable de moduler la force de décollement nécessaire à la séparation du revêtement silicone de l'adhésif.

En l'espèce, cette force de décollement peut être quantifiée. Bien que ses valeurs puissent varier de manière significative selon la méthode de mesure retenue, on peut globalement la caractériser comme suit pour une vitesse de décollement faible c'est-à-dire de l'ordre de 30 cm/mn et selon la méthode FTM3 :

- une force de décollement inférieure à 15g/cm est considérée comme faible,

- une force de décollement supérieure à 15g/cm et inférieure à 70g/cm est considérée moyenne, et

- une force de décollement supérieure à 70g/cm et de préférence inférieure à 200g/cm est considérée élevée.

La présente invention a précisément pour objet de proposer un complexe silicone/adhésif dont la force de décollement peut être ajustée à la demande et de préférence à une valeur comprise dans la plage énoncée ci-dessus, à savoir entre 15g/cm et 200g/cm.

Plus précisément, la présente invention concerne le domaine des complexes adhésif/silicone polymérisables et/ou réticulables thermiquement et dont la force de décollement de leur interface est modulable photochimiquement.

La demande de brevet DE 198 31 775 A décrit déjà un complexe silicone / adhésif à force de décollement modulable. Toutefois, l'aptitude de ce complexe à manifester une force de décollement modulable est directement liée à la nature chimique de la matrice siliconée. Elle dérive de polyorganosiloxanes acryliques et présente des noeuds de réticulation acrylate. Selon son degré de réticulation, cette matrice silicone manifeste une adhésion plus ou moins importante vis-à-vis du film adhésif qui lui est associé. Par ailleurs, dans cet art antérieur, la présence d'un sel de chrome dans la matrice silicanée est requise pour la manifestation de cette propriété.

Pour sa part, la présente invention vise à proposer l'utilisation d'un dérivé acrylique ou alcényléther organique ou siliconé à titre d'additif de régulation de la force de décollement d'une interface silicone adhésif dans un complexe silicone / adhésif.

Plus particulièrement, la présente invention a pour premier objet une telle utilisation dans un complexe silicone/adhésif comprenant au moins un revêtement silicone appliqué sur un premier support et un revêtement adhésif appliqué sur un second support, et dont la force de décollement d'une Interface silicone/adhésif est modulable, caractérisé en ce que son revêtement silicone dérive de la polymérisation et/ou réticulation thermique(s) de :

- soit des monomères, oligomères et/ou polymères portant au moins un motif structural Si-H réactif et des monomères, oligumères et/ou polymères portant au moins un groupement aliphatique Insaturé réactif,

- soit des monomères, oligomères et/ou polymères portant au moins un motif structural Si-H réactif et des monomères, oligomères et/ou polymères portant au moins un motif Si-OH réactif,

- soit des monomères, oligomères et/ou polymères portant au moins un motif structural Si-H réactif et des monomères, oligomères et/ou polymères portant au moins un motif de type époxy, oxétane et/ou dioxolane réactif.

et en ce que l'activité dudit additif est initiée et modulable photochimiquement.

Cette activation est de préférence réalisée par exposition à défaut du complexe, d'au moins son interface

2

silicone/adhésif à au moins une irradiation d'U.V.

Selon une première variante, les deux supports sont constitués de deux entités distinctes, disposées de manière à ce que le revêtement de silicone du premier support soit en contact avec le revêtement adhésif du second support. Ce mode de réalisation est en particulier illustré par des systèmes dits étiquettes autocollantes. Dans ce cas particulier, la force de décollement de l'interface silicone/adhésif s'exerce lors de la séparation des deux supports.

Dans une seconde variante, les deux supports sont constitués respectivement par chacune des deux faces d'une même entité. Ce second mode de réalisation est en particulier illustré par les systèmes dits rubans adhésifs. Le revêtement anti-adhérent, c'est-à-dire à base de la matrice silicone et le revêtement adhésif sont mis en contact lors de l'enroulement du support sur lui-même. Dans ce cas, la force de décollement s'exerce au niveau de l'interface silicone/adhésif sous l'effet de la séparation d'une face inférieure avec une face supérieure du matériau.

Selon un mode préféré de l'invention, l'additif de régulation de la force de décollement de l'interface silicone/adhésif retenu dans le cadre de la présente invention est choisi parmi :

- les acryliques organiques,

- les alcényléthers, et

- les silicones acryliques et/ou à fonctions alcényléthers.

Conviennent notamment comme acryliques organiques les espèces acrylates et notamment acrylates epoxydés, acryloglycéropolyesters, acrylates multifonctionnels, acrylo-urétanes, acrylopolyéthers, acrylopolyesters, polyesters insaturés, et acrylo-acryliques.

Sont plus particulièrement préférés les triméthylpentanediotriacrylate, triacrylate de triméthylol propane, et diacrylate de tripropylène glycol.

En ce qui concerne les alcényléthers, ils peuvent être choisis parmi le cyclohexanediméthanoldivinyléther, le triéthylenglycoldivinyléther (DVE-3), l'hydroxybutylvinyléther, le dodécylvinyléther et les autres vinyléthers commercialisés par la société ISP et qui sont en partie décrits dans la demande de brevet WO 99/19371.

Selon une variante préférée de l'invention cet additif est choisi parmi des silicones acryliques ou méthacryliques et/ou à fonctions alcényléther.

A titre représentatif des dérivés acryliques ou méthacryliques de silicone convenant tout particulièrement à l'invention, on peut plus particulièrement citer les dérivés acryliques, méthacryliques, éthers et esters. Parmi ceux cl conviennent notamment les polyorganosiloxanes à fonction acrylate et/ou méthacrylate liés à la chaîne polysiloxane par une liaison Si-C. De tels dérivés acryliques sont notamment décrits dans les brevets EP 281 718 et FR 2 632 960.

En ce qui concerne les polyorganosiloxanes à fonction alcényléther, ils dérivent généralement d'une réaction d'hydrosilylation entre des huiles contenant des motifs structuraux SI-N et des composés portant des fonctions alcényléther tels des allylvinyléthers, allyvinyloxyéthoxybenzène et analogues. Ce type de composés est notamment référencé dans US 5 340 898.

Cet additif est utilisé dans le revêtement silicone en quantité suffisante pour permettre la régulation de la force de décollement de l'interface adhésif/silicone.

En ce qui concerne la quantité en l'additif, elle peut varier largement.

Toutefois, l'additif est de préférence employé à raison de 0,1 à 20% environ du poids du mélange total silicone. Bien entendu, la quantité en cet additif est susceptible de varier de manière significative selon qu'il est de nature siliconée ou non.

C'est ainsi que dans le cas particulier où cet additif est un dérivé acrylique organique ou un alcényléther, sa quantité est généralement comprise entre 0,1 et 10% environ, de préférence 0,5 et 5% environ et plus préférentiellement 1 et 3%.

En revanche, un additif de type silicone est de préférence utilisé jusqu'à 20% en poids et de préférence 15% en poids.

Cette concentration en additif dispersé au sein de la matrice siliconée constitue par ailleurs en soi un paramètre de modulation de la force de décollement

Il semble par ailleurs que la quantité en rayonnement généralement exprimée en doses de rayonnement UV soit un paramètre utile pour moduler l'activité de l'additif défini ci-dessus et donc ajuster l'amplitude de la force de décollement générée par cet additif à la valeur souhaitée par activation photochimique.

C'est ainsi que dans les exemples figurant ci-après, on note que le niveau d'adhérence du revêtement silicone au revêtement adhésif qui lui est associé, est augmenté significativement après irradiation. Avantageusement, la force d'adhérence s'avère variable selon le nombre de passages sous les lampes UV et donc de l'énergie UV reçue.

Cette énergie UV peut être dispensée par tout dispositif adéquat, soit sous l'effet de flash ou encore d'éclairage stroboscopique. A titre illustratif et non limitatif des sources en rayons UV susceptibles d'être mises en oeuvre pour activer l'additif, on peut notamment citer les systèmes UV type lampes micro-ondes ou lampes à arc.

En conséquence, l'utilisation selon l'invention a pour avantage de permettre la préparation d'un complexe silicone / adhésif dont il s'avère possible de modifier la force de décollement au niveau de son interface silicone / adhésif en fonction, d'une part, de la quantité en additif incorporé et, d'autre part, de la quantité en rayonnement appliquée au niveau de cette interface.

Selon un premier mode de réalisation de l'invention, le revêtement silicone peut dériver de la polymérisation et/ou réticulation de monomères, oligomères et/ou polymères possédant au moins un groupement réactif aliphatique insaturé par molécule et de monomères, oligomères et/ou polymères ayant au moins un radical réactif Si-H.

Il s'agit en fait d'une réaction d'hydrosilylation entre les deux types de polyorganosiloxanes. Les conditions réactionnelles d'hydrosilylation sont des conditions usuelles qui relèvent de la compétence de l'homme de l'art.

Selon une variante particulière de ce mode de réalisation de l'invention, le revêtement silicone dérive de la polymérisation et/ou réticulation d'au moins un polyorganosiloxane de type A tel que décrit ci-après, ayant par molécule au moins un radical réactif Si-H et exempte d'atome de silicium lié à plus de deux atomes d'hydrogène et d'autre part un polyorganosiloxane de type B présentant par molécule au moins un groupement aliphatique insaturé réactif.

Avantageusement, les polyorganosiloxanes de type A sont choisis parmi les polyorganohydrogénosiloxanes comportant :

   * des motifs de formule suivante :

$$H_aW_bSiO_{\frac{4-(a+b)}{2}} \qquad (1)$$

   dans laquelle :

-   les symboles W, semblables et/ou différents représentent :

      · un radical alkyle linéaire ou ramifié contenant 1 à 18 atomes de carbone, éventuellement substitué par au moins un halogène, de préférence le fluor, les radicaux alkyle étant de préférence méthyle, éthyle, propyle, octyle et 3,3,3-trifluoropropyle,

      un radical cycloalkyle contenant entre 5 et 8 atomes de carbone cycliques, éventuellement substitué par au moins un halogène, de préférence le fluor,

      · un radical aryle contenant entre 6 et 12 atomes de carbone pouvant être substitué éventuellement sur la partie aryle par des halogènes, des alkyles et/ou des alkoxyles contenant 1 à 3 atomes de carbone, de préférence phényle ou dichlorophényle,

      · une partie arylalkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone,

-   a est 1 ou 2, b est 0, 1 ou 2, avec la somme (a+b) ayant une valeur comprise entre 1 et 3,

   * éventuellement d'autres motifs de formule moyenne (2):

$$W_cSiO_{\frac{4-c}{2}} \qquad (2)$$

dans laquelle W a la même signification que ci-dessus et c a une valeur comprise entre 0 et 3.

Le polyorganosiloxane de type A peut être uniquement formé de motif de formule (1) ou comporter en plus des motifs de formule (2).

Il peut présenter une structure linéaire, ramifiée ou non, cyclique ou en réseau. Le degré de polymérisation est supérieur ou égal à 2. Plus généralement, il est inférieur à 5000.

Des exemples de motifs de formule (1) sont :
$H(CH_3)SiO_{1/2}$, $HCH_3SiO_{2/2}$, $H(C_6H_5)SiO_{2/2}$.

Lorsqu'il s'agit de polymères linéaires, ceux-ci sont essentiellement constitués de motifs « D » $W_2SiO_{2/2}$, $WHSiO_{2/2}$, et « M » $W_3SiO_{1/2}$, $WH_2SiO_{1/2}$ ; les motifs « M » terminaux bloqueurs pouvant être des groupes trialkylsiloxy, dialkylarylsiloxy.

A titre d'exemples de motifs « M » terminaux, on peut citer les groupes triméthylsiloxy, diméthylphénylsiloxy, diméthyléthoxysiloxy et diméthyléthyltriéthoxy-silylsiloxy.

A titre d'exemple de motifs « D », on peut citer les groupes diméthylsiloxy et méthylphénylsiloxy.

Ces polyorganosiloxanes linéaires peuvent être des huiles de viscosité dynamique à 25°C de l'ordre de 1 à 100 000 mPa.s à 25°C, généralement de l'ordre de 10 à 5000 mPa.s à 25°C, ou des gommes présentant une masse moléculaire de l'ordre de 1 000 000.

Lorsqu'il s'agit de polyorganosiloxanes cycliques, ceux-ci sont constitués de motifs « D » $W_2SiO_{2/2}$, et $WHSiO_{2/2}$, qui peuvent être du type dialkylsiloxy ou alkylarylsiloxy. Ils présentent une viscosité de l'ordre de 1 à 5000 mPa.s.

La viscosité dynamique à 25°C de tous les polymères considérés dans le présent exposé peut être mesurée à l'aide d'un viscosimètre BROOKFIELD, selon la norme AFNOR NFT 76 102 de février 1972.

Des exemples de polyorganosiloxanes de type A sont :

- les diméthylpolysiloxanes à extrémités hydrogénodiméthylsilyles,

- les copolymères diméthylhydrogénométhylpolysiloxanes à extrémités triméthylsilyles,

- les copolymères diméthylhydrogénométhylpolysiloxanes à extrémités hydrogénodiméthylsilyles,

- les hydrogénométhylpolysiloxanes à extrémités triméthylsilyles, et

- les hydrogénométhylpolysiloxanes cycliques.

S'agissant des polyorganosiloxanes de type B à savoir présentant, par molécule, au moins un groupement réactif aliphatique insaturé, ils sont de préférence sélectionnés parmi les polyorganosiloxanes comprenant des motifs semblables ou différents de formule (3):

$$W'_d Y_e SiO_{\frac{4-(d+e)}{2}} \qquad (3)$$

dans laquelle :

- - les symboles W, semblables et/ou différents, répondent à la même définition que celle donnée ci-dessus pour W,

- les symboles Y sont semblables ou différents et représentent un reste alcényle linéaire ou ramifié en $C_1$-$C_{12}$, et présentant au moins une insaturation éthylénique en extrémité de chaîne et/ou dans la chaîne et éventuellement au moins un hétéroatome ;

- e est égal à 1 ou 2, d est égal à 0, 1 ou 2 avec la somme (d +e) ayant une valeur comprise entre 1 et 3;

  * éventuellement d'autres motifs de formule moyenne (2'):

$$W'_c SiO_{\frac{4-c}{2}} \qquad (2')$$

dans laquelle W' a la même signification que ci-dessus et c a une valeur comprise entre 0 et 3.

S'agissant des restes Y, ils sont avantageusement choisis parmi la liste suivante : vinyle, propényle, 3-butényle, 5-hexenyle, 9 décényle, 10-undécényle, 5,9-décadienyle et 6-11-dodécadiényle.

Ces polyorganosiloxanes peuvent présenter une structure linéaire (ramifiée ou non) cyclique ou en réseau. Leur degré de polymérisation est, de préférence, compris entre 2 et 5000.

Lorsqu'il s'agit de polymères linéaires, ceux-ci sont essentiellement constitués de motifs « D » $W'SiO_{2/2}$, $Y_2SiO_{2/2}$ et $W'_2SiO_{2/2}$, et « M » $W'YSiO_{1/2}$, $W'_2YSiO_{1/2}$ et $W'_3SiO_{1/2}$, les motifs « M » terminaux bloqueurs pouvant être des groupes trialkylsiloxy, dialkylarylsiloxy, dialkylvinyisiloxy ou dialkylalcénylsiloxy.

Lesdits polyorganosiloxanes linéaires peuvent être des huiles de viscosité dynamique à 25°C de l'ordre de 1 à 100 000 mPa.s à 25°C, généralement de l'ordre de 10 à 5000 mPa.s à 25°C, ou des gommes présentant une masse moléculaire de l'ordre de 1 000 000.

Lorsqu'il s'agit de polyorganosiloxanes cycliques, ceux-ci sont constitués de motifs « D » $W'SiO_{2/2}$, $W'YSiO_{2/2}$ et $W'_2SiO_{2/2}$, qui peuvent être du type dialkylsiloxy, alkylarylsiloxy, alkylvinylsiloxy ou alkylsiloxy ; des exemples de tels motifs ont déjà été cités ci-dessus.

Lesdits polyorganosiloxanes de type B cycliques présentent une viscosité de l'ordre de 1 à 5000 mPa.s.

Les polyorganosiloxanes de type B à insaturation aliphatique utiles dans le cadre de l'utilisation selon l'invention sont, par exemple, ceux à insaturation oléfinique ou acétylénique bien connus dans le domaine technique considéré. A cet égard, on peut se référer aux brevets américains 3 159 662, 3 220 272 et 3 410 886, qui décrivent les susdits composés.

Suivant une variante intéressante de ce mode de réalisation selon l'invention, le mélange réactionnel comprend des polyorganosiloxanes de type A et des polyorganosiloxanes de type B en quantité telle que le ratio molaire Si-H/ groupements insaturés réactifs soit compris entre 0,4 et 10 de préférence entre 1 et 4 et, plus préférentiellement encore, soit de l'ordre de 1,7.

Les conditions réactionnelles d'hydrosilylation par thermoactivation sont les conditions usuelles. Elles sont généralement catalysées par des complexes thermosensibles du platine. A titre représentatif de ces catalyseurs, on peut notamment citer le catalyseur de KARSTEDT. Le catalyseur est présent à raison de 1 à 400, de préférence de 10 à 300, et plus préférentiellement de 20 à 200 ppm de platine métal exprimé en poids par rapport au composé polyorganosiloxane utilisé.

Outre ce catalyseur, les composants du revêtement silicone contiennent un inhibiteur de la réaction. En fait, la chaleur est employée pour désactiver cet inhibiteur et pour permettre le démarrage de la réticulation. Conviennent notamment à titre d'inhibiteur, les esters carboxyliques dialkyles tels que le dialyle maléate ou des hydroperoxydes.

Les réactions de réticulation des huiles silicones, en particulier l'hydrosilylation de type Si-H/Si-Vi, catalysée par des complexes thermosensibles du platine obéissent à un processus de catalyse homogène.

Dans le second mode de réalisation de l'invention, le revêtement de silicone dérive d'une réaction de polymérisation et/ou réticulation entre au moins un dérivé polyorganosiloxane de type A possédant au moins un radical Si-H réactif par molécule et de préférence tel que défini ci-dessus et au moins un polyorganosiloxane présentant par molécule au moins un radical Si-OH réactif et qui répond de préférence à la définition du polyorganosiloxane de type C décrit ci-après. Cette réaction est en fait une déshydrogénocondensation.

Les polyorganosiloxanes de type C sont choisis parmi les polyorganosiloxanes comportant :

* des motifs de formule (4) suivante :

$$(OH)_f W''_g SiO_{\frac{4-(f+g)}{2}} \quad (4)$$

dans laquelle :

-  les symboles W'', semblables ou différents, sont de définition identique à W selon la formule (1),

-  f est 1 ou 2, g est 0, 1 ou 2, avec la somme (f+g) ayant une valeur comprise entre 1 et 3,

et éventuellement d'autres motifs de formule (2'') :

$$W''cSiO_{\frac{4-c}{2}} \quad (2)$$

dans laquelle W'' a la même signification que ci-dessus et c a une valeur comprise entre 0 et 3.

Le polyorganosiloxane de type C peut être uniquement formé de motif de formule (4) ou comporter en plus des motifs de formule (2'').

Il peut présenter une structure linéaire, ramifiée ou non, cyclique ou en réseau. Le degré de polymérisation est supérieur ou égal à 2. Plus généralement, il est inférieur à 5000.

Des exemples de motifs de formule (4) sont :
$HO(CH_3)SiO_{1/2}$, $HOCH_3SiO_{2/2}$ et $HO(C_6H_5)SiO_{2/2}$.

Lorsqu'il s'agit de polymères linéaires, ceux-ci sont essentiellement constitués de motifs « D » $W''(OH)SiO_{2/2}$, $(OH)_2SiO_{2/2}$ et $W''_2SiO_{2/2}$, et « M » $W''(OH)_2SiO_{1/2}$ et $W''_3SiO_{1/2}$.

Ces polyorganosiloxanes linéaires peuvent être des huiles de viscosité dynamique à 25°C de l'ordre de 1 à 100 000 mPa.s à 25°C, généralement de l'ordre de 10 à 5000 mPa.s à 25°C, ou des gommes présentant une masse moléculaire de l'ordre de 1 000 000.

Lorsqu'il s'agit de polyorganosiloxanes cycliques, ceux-ci sont constitués de motifs « D » $W''(OH)SiO_{2/2}$, $(OH)_2SiO_{2/2}$, et $W''_2SiO_{2/2}$, qui peuvent être du type dialkylsiloxy ou alkylarylsiloxy. Ils présentent une viscosité de l'ordre de 1 à 5000 mPa.s.

Selon une variante avantageuse de ce mode de réalisation de l'invention, les polyorganosiloxanes de type A utilisés comportent de 1 à 50 motifs Si-H par molécule et/ou les polyorganosiloxanes de type C utilisés comportent de 1 à 50 motifs Si-OH par molécule.

D'autre part, en pratique, au sein du mélange réactionnel, au moins un des polyorganosiloxanes de type A comprend au moins trois radicaux Si-H et au moins un des polyorganosiloxanes de type C comprend au moins deux groupements Si-OH.

Les conditions de réaction de déshydrogénocondensation entre les polyorganosiloxanes de type A et les polyorganosiloxanes de type C sont les conditions usuelles, par exemple par activation de type thermique en présence d'un catalyseur (W. ALTERNOLL « Chemistry and Technology of Silicones » Ed 68, ch 5, p 201-205).

En ce qui concerne le troisième mode de réalisation de l'invention selon lequel le revêtement dérive d'une réaction de polymérisation et/ou réticulation entre au moins un dérivé polyorganosiloxane de type A possédant au moins un radical Si-H réactif par molécule et de préférence tel que défini ci-dessus et au moins un polyorganosiloxane présentant par molécule au moins un motif de type époxy, oxétane et/ou dioxolane réactif, ce dernier polyorganosiloxane est de préférence un polyorganosiloxane de type D choisi parmi les polyorganosiloxanes comportant :

* des motifs de formule suivante (5):

$$Z_h W'''_i SiO_{\frac{4-(h+j)}{2}} \qquad (5)$$

dans laquelle :

- les symboles W''', semblables et/ou différents, répondent à la même définition que celle donnée pour W à la formule (1) :

- les symboles Z sont semblables ou différents et représentent :

· un groupement W''',

· un radical hydrogène,

· et/ou un groupement, époxyfonctionnel, oxétanefonctionnel, dioxolanefonctionnel et/ou alcénylétherfonctionnel, relié au silicium du polyorganosiloxane par l'intermédiaire d'un radical divalent contenant de 2 à 20 atomes de carbone et pouvant contenir au moins un hétéroatome, de préférence de l'oxygène,

· avec l'un au moins des symboles Z représentant un groupement organique fonctionnel réticulable.

- h est égal à 1 ou 2, i est égale à 0,1 ou 2 avec la somme (h+i) ayant une valeur comprise entre 1 et 3.

* éventuellement d'autres motifs de formule (2''') :

$$W'''cSiO_{\frac{4-c}{2}} \qquad (2''')$$

dans laquelle W''' a la même signification que ci-dessus et c a une valeur comprise entre 0 et 3.

Selon une variante avantageuse de ce mode de réalisation de l'invention, les polyorganosiloxanes utilisés comportent de 3 à 10 groupements organofonctionnels par chaine macromoléculaire. Pour un groupement époxyfonctionnel, cela correspond à des taux d'époxyde variant de 20 à 2000 meq. molaire/100 g de polyorganosiloxane.

Dans le cas de la présente invention, le revêtement silicone est constitué d'une matrice au sein de laquelle les points de réticulation et/ou polymérisation sont différents de noeuds de réticulation acryliques.

Selon la première variante de l'invention qui implique la polymérisation et/ou réticulation d'un polyorganosiloxane de type Si-H avec un polyorganosiloxane portant au moins un groupement aliphatique insaturé réactif, les points de réticulation sont figurés par des liaisons alkyles ou alkényles pouvant le cas échéant contenir un hétéroatome. Selon la seconde variante de l'invention impliquant la polymérisation et/ou réticulation d'un polyorganosiloxane à motifs Si-H réactifs avec un polyorganosiloxane à motifs Si-OH réactifs, ces points de réticulations sont figurés par des liaisons siloxanes. Enfin, dans la troisième variante de l'invention où la matrice silicone dérive de la polymérisation et/ou réticulation d'un polyorganosiloxane à motifs Si-H réactifs avec un polyorganosiloxane portant au moins un motif de type époxy, oxétane et/ou dioxolane réactif, ces points de réticulation sont des liaisons de type éthersilylé.

Selon un mode de réalisation préféré de l'invention, le revêtement silicone dérive de la polymérisation et/ou réticulation de monomères, oligomères et/ou polymères possédant au moins un groupement réactif Si-H et de préférence de polyorganosiloxanes de type A avec des monomères, oligomères et/ou polymères possédant au moins des groupements réactifs $-Si-CH=CH_2$ et de préférence de polyorganosiloxanes de type B à motifs $-Si-CH=CH_2$ réactifs.

Ce type de matrice s'avère particulièrement avantageux en terme de solubilité vis-à-vis de l'additif qui est de nature acrylique.

Classiquement, le revêtement silicone peut éventuellement incorporer différents additifs. Il peut s'agir par exemple de charges minérales ou non et/ou de pigments tels des fibres synthétiques ou naturelles de carbonate de calcium, du talc, de l'argile, du dioxyde de titane ou de la silicine fumée. Cela peut permettre d'améliorer notamment les caractéristiques mécaniques des matériaux finaux.

Les colorants solubles, les inhibiteurs d'oxydation et/ou tout autre matériau n'interférant pas avec l'activité catalytique du complexe de platine ainsi que l'activité régulatrice de la force de décollement de l'additif peuvent être également ajoutés aux composants du revêtement silicone.

S'agissant du revêtement adhésif, on peut choisir un adhésif acrylique en phase aqueuse, en phase solvant, un caoutchouc en phase aqueuse ou en phase solvant, en acryliques ou en gommes thermofusibles, en latex ou autres adhésifs appropriés.

Conviennent plus particulièrement à l'invention, les adhésifs acryliques en phase aqueuse ou de préférence en phase solvant.

D'une manière générale, les adhésifs enduits à la surface d'une grande variété de matériaux de façon à obtenir des étiquettes, des rubans ou tout autre matériau autocollant sont des émulsions dites émulsions adhésives sensibles à la pression (PSA) qui dérivent de polymères acryliques. Elles confèrent au matériau la faculté d'adhérer à la surface d'un support, sans nécessiter une autre activation qu'une faible pression. Classiquement, les PSA sont obtenues par polymérisation majoritairement de monomères acrylates d'alkyle qui sont généralement présents à raison de 50 à environ 99 % et de préférence à raison de 80 à 99 % en poids et de monomères polaires copolymérisables comme par exemple de l'acide acrylique, en proportions plus réduites.

Les monomères, mis en oeuvre pour préparer les PSA, sont sélectionnés en fonction de leur température de transition vitreuse, Tg, pour conférer aux polymères les incorporant, le comportement attendu en termes d'adhérence et de viscoélasticité. A cet effet, les monomères possèdent avantageusement une température de transition vitreuse suffisamment basse, généralement comprise entre -70 et -10 °C et de préférence est inférieure à -30 C.

Plus précisément, ces monomères sont choisis dans le groupe constitué

- des esters(méth)acryliques comme les esters de l'acide acrylique et de l'acide méthacrylique avec les alcanols en $C_1$-$C_{12}$ hydrogénés ou fluorés, de préférence $C_1$-$C_8$, notamment l'acrylate de méthyle, l'acrylate d'éthyle, l'acrylate de propyle, l'acrylate de n-butyle, l'acrylate d'isobutyle, l'acrylate de 2-éthylehexyle, l'acrylate de tert-butyle, l'acrylate d'hexyle, l'acrylate d'heptyle, l'acrylate d'octyle, l'acrylate d'isooctyle, l'acrylate de décyle, l'acrylate de dodécyle, le méthacrylate de méthyle, le méthacrylate d'éthyle, le méthacrylate de n-butyle, le méthacrylate d'isobutyle ;

- des nitriles vinyliques dont plus particulièrement ceux ayant de 3 à 12 atomes de carbone, comme en particulier l'acrylonitrile et le méthacrylonitrile ;

- des esters vinyliques d'acide carboxylique comme l'acétate de vinyle, le versatate de vinyle, le propionate de vinyle,

- des acides mono- et di- carboxyliques insaturés éthyléniques comme l'acide acrylique, l'acide méthacrylique, l'acide itaconique, l'acide maléique, l'acide fumarique et les mono- et di- alkylesters des acides mono- et di-carboxyliques du type cité avec les alcanols ayant de préférence 1 à 8 atomes de carbone et leurs dérivés N-substitués,

- des amides des acides carboxyliques insaturés comme l'acrylamide, le méthacrylamide, le N-méthylolacrylamide ou méthacrylamide, les N-alkylacrylamides,

- des monomères éthyléniques comportant un groupe acide sulfonique et ses sels alcalins ou d'ammonium par exemple l'acide vinylsulfonique, l'acide vinylbenzènesulfonique, l'acide alpha-acrylamido méthylpropane-sulfonique, le 2-sulfoéthylène-méthacrylate,

- des monomères éthyléniques insaturés comportant un groupe amino secondaire, tertiaire ou quaternaire, ou un groupe hétérocyclique contenant de l'azote tel que par exemple les vinylpyridines, le vinylimidazole, les (méth) acrylates d'aminoalkyle et les (méth)acrylamides d'aminoalkyle comme le diméthylaminoéthyl-acrylate ou diméthylaminoéthyl-méthacrylate, le ditertiobutylaminoéthyl-acrylate ou le ditertiobutylaminoéthyl-méthacrylate, le diméthylaminométhylacrylamide ou diméthylaminométhyl-méthacrylamide,

- des monomères zwitterioniques comme par exemple l'acrylate de sulfopropyl(diméthyl)aminopropyle,

- des monomères éthyléniques portant un groupement sulfate,

- des monomères éthyléniques portant une ou plusieurs fonction(s) phosphate et/ou phosphonate,

- et leurs mélanges.

De préférence, les monomères, mis en oeuvre dans la polymérisation en émulsion, sont majoritairement des monomères (méth)acrylates d'alkyle, présents à raison de 50 % à environ 99 % et de préférence à raison de 80 % à 99 % en poids par rapport au poids en monomères présents dans l'émulsion.

Plus préférentiellement, ils sont choisis parmi l'acrylate de 2-éthylhexyle, l'acrylate de butyle, l'acrylate d'hexyle, l'acrylate d'heptyle, l'acrylate d'octyle, l'acrylate d'iso-octyle, l'acrylate de décyle, l'acrylate d'isobutyle, l'acrylate de dodécyle ou leurs mélanges, les méthacrylates comme le méthacrylate de n-butyle, l'acide méthacrylique, l'acide acrylique, l'acide itaconique, l'acide maléique et/ou l'acrylamide.

Le procédé de préparation des PSA, considérés selon la présente invention, met généralement en oeuvre une polymérisation en émulsion par voie radicalaire à pression atmosphérique et à une température généralement comprise entre 10 et 90°C, des monomères correspondants. Classiquement, cette technique de polymérisation requiert, outre l'initiateur radicalaire, un mélange d'émulsifiants anioniques et/ou non ioniques pour stabiliser ladite émulsion.

Ces PSA peuvent bien entendu être utilisé sous forme formulée, c'est à dire en mélange avec des additifs conventionnels des adhésifs tels que les agents mouillants, tackifiants...

Classiquement les complexes selon l'invention peuvent comprendre, en outre, un ou plusieurs additifs choisis en fonction de l'application finale visée.

Les additifs peuvent être notamment des composés éventuellement sous forme de polymères, à hydrogènes mobiles comme des alcools, des glycols et des polyols, utiles pour améliorer la flexibilité notamment de la matrice silicone après polymérisation et/ou réticulation ; on peut citer par exemple les polycaprolactones-polyols, en particulier le polymère obtenu au départ de 2-éthyl-2-(hydroxyméthyl)-1,3-propane-diol et de 2-oxépanone tel que le produit TONE POLYOL-301 commercialisé par la Société UNION CARBIDE, ou les autres polymères commerciaux TONE POLYOL 201 et TONE POLYOL 12703 de la société UNION CARBIDE. On peut également citer comme additifs, les diacides à longue chaîne alkyle, les esters gras d'acides insaturés époxydés ou non, par exemple l'huile de soja époxydée ou l'huile de lin époxydée, le 2-éthylhexylester époxydé, le 2-éthylhexyl époxy stéarate, l'époxystéarate d'octyle, les esters amyliques époxydés, les acrylates d'huile de soja époxydés, les acrylates d'huile de lin époxydés, l'éther diglycidique de glycolpolypropylène, les époxydes aliphatiques à longue chaîne, etc..

Il peut s'agir encore, quelle que soit la nature de la matrice polymérisable, par exemple : de charges telles que notamment des fibres synthétiques (polymères) ou naturelles broyées, du carbonate de calcium, du talc, de l'argile, du dioxyde de titane, de la silice de précipitation ou de combustion ; de colorants solubles : d'inhibiteurs d'oxydation et de corrosion ; de modulateurs d'adhérence organosiliciques ou non ; d'agents fongicides, bactéricides, anti-microbiens; et/ou de tout autre matériau n'interférant pas avec l'activité de l'additif.

Les complexes sont tout particulièrement intéressants lorsqu'ils sont utilisés tels quels pour rendre un matériau non adhérent, tel que des feuilles métalliques, du verre, des matières plastiques ou du papier, à d'autres matériaux auxquels ils adhéreraient normalement.

Les quantités en revêtement silicone déposées sur les supports s'échelonnent le plus souvent entre 0,1 et 5 $g/m^2$ de surface traitée. Ces quantités dépendent de la nature des supports et des propriétés anti-adhérentes recherchées. Elles sont plus souvent comprises entre 0,5 et 1,5 $g/m^2$ pour des supports non poreux.

En ce qui concerne les quantités en revêtement adhésif, elles sont de préférence inférieures à $200g/m^2$ et plus préférentiellement à 100 $g/m^2$. Le revêtement adhésif peut être déposé par tout mode d'application conventionnel. Il peut notamment être appliqué par transfert.

Les supports peuvent être un matériau métallique tel fer blanc, et de préférence un matériau cellulosique de type papier ou carton par exemple, ou un matériau polymérique de type vinyle. Des films polymériques thermoplastiques comme le polyéthylène, le prolypropylène ou le polyester sont particulièrement avantageux.

Dans le mode de réalisation où le revêtement adhésif est en contact avec un support constitué d'un second matériau ce second matériau peut être choisi parmi les matériaux proposés pour le premier support et être de nature identique ou non au premier support.

Enfin, le support sur lequel est appliqué le revêtement silicone et/ou le revêtement adhésif peut déjà être revêtu d'un revêtement Initial auquel est superposé un revêtement tel que décrit sous réserve que ce revêtement annexe soit transparent aux radiations photochimiques utilisées.

Les exemple et figures qui suivent sont présentés à titre illustratif et non limitatif de la présente invention.

FIGURES

Figure 1 : Evolution du niveau d'adhérence en fonction du nombre de passages sous la lampe UV d'un complexe adhésif/silicone comprenant un silicone thermique additivé avec une huile silicone acrylate.

Figure 2 : Représentation graphique de l'intensité de la dose d'irradiation UV émise en fonction du nombre de passages sous la lampe UV.

EXEMPLE 1

On utilise une formulation silicone réticulant thermiquement standard comprenant :

Une première huile silicone vinylée dite du type B. Elle répond à la formule :

$$CH_2=CH-Si(CH_3)_2-O-(SiO(CH_3)_2)_a-Si(CH_3)_2-CH=CH_2$$

avec a=136

Cette huile contient 0.15% en poids d'inhibiteur Ethynil cyclohexanol.

La seconde huile silicone est une huile silicone fonctionnalisée Si-H dite de type A et de formule :

$$Si(CH_3)_3-O-(SiO(CH_3)_2)_a-(SiO(CH_3)H)_b-Si(CH_3)_3$$

avec a=25 et b=51

Le catalyseur est à base de Platine de Karstedt : 2000ppm de platine dilué dans une huile vinylée.

La formulation est ajustée pour avoir un rapport molaire Si-H/SiVi de 1,7 et un taux de platine de l'ordre de 100 ppm.

L'additif est figuré par une huile silicone acrylate commercialisée par Rhodia : Silcolease ® résine 21621

Il est ajouté à raison de 10 parties dans la formulation du silicone identifiée ci-dessus et dont la composition détaillée est donnée dans le tableau I ci-après qui présente à titre comparatif, la composition d'une formulation non additivée :

TABLEAU I

| Formulation bain | Formulation témoin | Formulation additivée |
|---|---|---|
| Huile vinylée | 100 | 90 |

Suite de tableau

| Formulation bain | Formulation témoin | Formulation additivée |
|---|---|---|
| Réticulant | 2.5 | 2.2 |
| Catalyseur Pt | 5 | 5 |
| Huile acrylate | 0 | 10 |

Chacune des formulations est enduite à une vitesse de 50 m/min sur un film de propylène (OPP CR 50 d'UCB) à l'aide d'un pilote d'enduction Rotomec. Le revêtement siliconé est réticulé par passage dans un four thermique chauffé à 150°C.

Le dépôt est de l'ordre de 1,2 g/m$^2$ pour assurer une bonne couverture du support. Le revêtement est ensuite adhésivé avec un ruban adhésif acrylique à savoir le TESA® 4970. Le complexe est soumis à une irradiation d'une lampe UV (lampe IST / tube à arc mercure). Ces cycles consistent à réaliser un ou plusieurs passages successifs sous la lampe UV du banc IST réglée à une puissance de 160W/cm et à une vitesse de passage de 50m/mn. Cette irradiation est réalisée au travers du film support et de la couche silicone. Plusieurs passages sous la lampe peuvent être effectués. Le complexe est ensuite séparé par un test de pelage conforme à la norme FINAT 3.

Les valeurs d'adhérence obtenues sur un complexe non additivé et un complexe conforme à l'invention sont comparées.

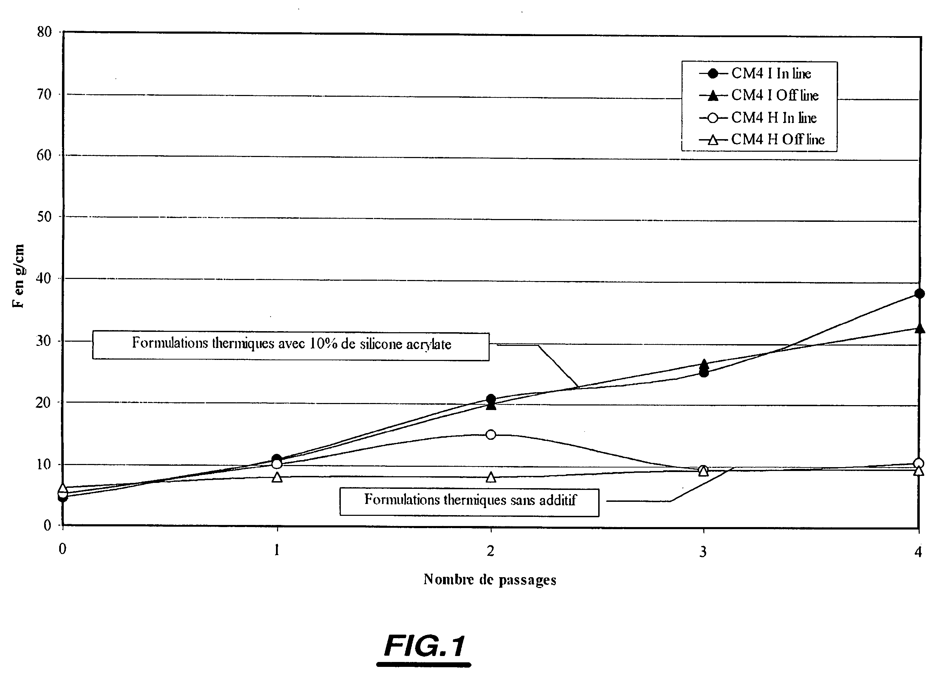

Les résultats sont présentés en figure 1.

Dans un second temps, on procède à l'évaluation de la force de décollement du complexe selon l'invention en fonction du nombre de passages sous UV.

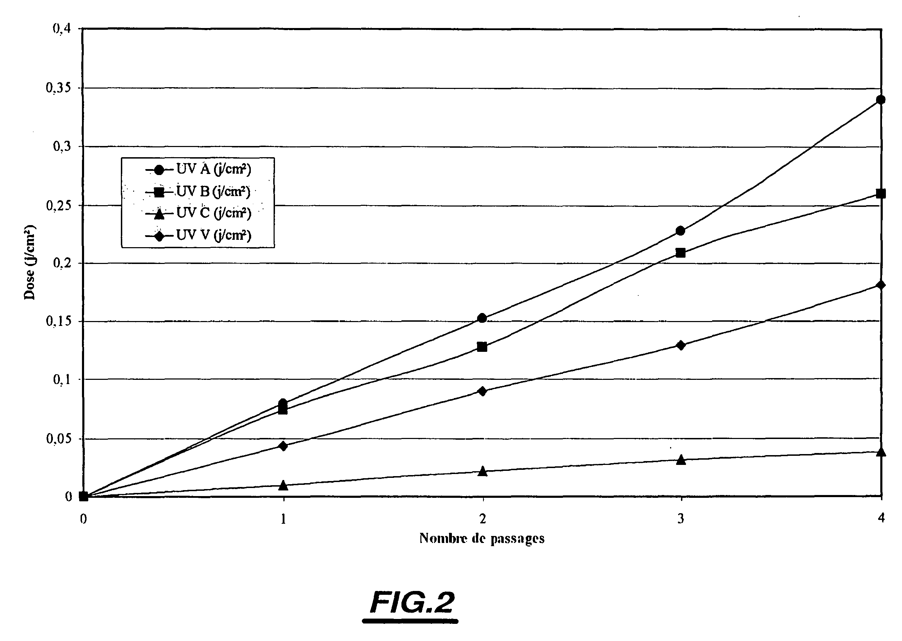

La figure 2 rend compte des résultats obtenus.

On note dans tous les cas que le niveau d'adhérence du PSA est augmenté après irradiation. Cette force d'adhérence est fonction du nombre de passages sous la lampe UV et donc de l'énergie UV reçue par l'assemblage. L'effet modulant après irradiation UV du complexe est donc vérifié dans cet exemple.

**Revendications**

1. Utilisation d'un dérivé acrylique ou alcényléther organique ou silicone, à titre d'additif de régulation de la force de décollement d'une interface silicone/adhésif, dans un complexe silicone/adhésif comprenant au moins un revêtement silicone appliqué sur un premier support et un revêtement adhésif appliqué sur un second support, **caractérisé en ce que** ledit revêtement silicone dérive de la polymérisation et/ou réticulation thermique(s) de :

   - soit des monomères, oligomères et/ou polymères portant au moins un motif structural Si-H réactif et des monomères, oligomères et/ou polymères portant au moins un groupement aliphatique insaturé réactif,
   - soit des monomères, oligomères et/ou polymères portant au moins un motif structural Si-H réactif et des monomères, ollgomères et/ou polymères portant au moins un motif Si-OH réactif,
   - soit des monomères, oligomères et/ou polymères portant au moins un motif structural Si-H réactif et des monomères, oligomères et/ou polymères portant au moins un motif de type époxy, oxétane et/ou dioxolane réactif,

   et **en ce que** l'activité dudit additif est initiée et modulable photochimiquement.

2. Utilisation selon la revendication 1, **caractérisée en ce que** les deux supports sont constitués de deux entités distinctes, disposées de manière à ce que le revêtement de silicone du premier support soit en contact avec le revêtement adhésif du second support.

3. Utilisation selon la revendication 1, **caractérisée en ce que** les deux supports sont constitués respectivement par chacune des deux faces d'une même entité.

4. Utilisation selon l'une des revendications 1 à 3, **caractérisée en ce que** l'activité de l'additif de régulation de la force de décollement est initiée et modulée par exposition d'au moins l'interface silicone/adhésif à au moins une irradiation UV.

5. Utilisation selon l'une des revendications 1 à 4, **caractérisé en ce que** ledit additif de régulation de la force de décollement est un acrylique organique choisi parmi les espèces acrylates et notamment acrylates epoxydés, acryloglycéropolyesters, acrylates multifonctionnels, acrylo-urétenes, acrylopolyéthers, acrylopolyesters, polyesters insaturés, acrylo-acryliques.

6. Utilisation selon l'une des revendications 1 à 4, **caractérisée en ce que** ledit additif de régulation de la force de décollement est un silicone acrylique et/ou à fonctions elcényléther.

7. Utilisation selon la revendication 6, **caractérisée en ce que** les silicones acryliques sont choisis parmi les polyorganosiloxanes à fonction acrylate et/ou méthacrylate liées à la chaîne polysiloxane par une liaison Si-C.

8. Utilisation selon l'une des revendications précédentes, **caractérisée en que** ledit additif de régulation de la force de décollement est employé à raison de 0,1 à 20 % en poids du mélange total silicone.

9. Utilisation selon l'une des revendications précédentes, **caractérisée en ce que** le revêtement silicone dérive de la polymérisation et/ou réticulation d'au moins un polyorganosiloxane de type A ayant par molécule au moins un radical Si-H réactif et exempte d'atome de silicium lié à plus de deux atomes d'hydrogène et au moins un polyorganosiloxane de type B présentant par molécule au moins un groupement aliphatique Insaturé réactif.

10. Utilisation selon la revendication 9, **caractérisée en ce que** le polyorganosiloxane de type A est un polyorganohydrogénosiloxane comportant:

    * des motifs de formule suivante :

$$H_a W_b SiO_{\frac{4-(a+b)}{2}} \qquad (1)$$

    dans laquelle :

    - les symboles W, semblables et/ou différents représentent:

        · un radical alkyle linéaire ou ramifié contenant 1 à 18 atomes de carbone, éventuellement substitué par au moins un halogène,
        · un radical cycloalkyle contenant entre 5 et 8 atomes de carbone cycliques, éventuellement substitué par au moins un halogène,
        · un radical aryle contenant entre 6 et 12 atomes de carbone pouvant être substitué éventuellement sur la partie aryle par au moins un atome d'halogène, ou un groupement alkyle et/ou alkoxyle contenant 1 à 3 atomes de carbone,
        · une partie arylalkyle ayant une partie alkyle contenant entre 5 et 14 atomes de carbone et une partie aryle contenant entre 6 et 12 atomes de carbone, substituée éventuellement sur la partie aryle par au moins un atome d'halogène, ou un groupement alkyle et/ou alkoxyle contenant 1 à 3 atomes de carbone,

    - a est 1 ou 2, b est 0, 1 ou 2, avec la somme (a+b) ayant une valeur comprise entre 1 et 3, et

    * éventuellement d'autres motifs de formule moyenne (2):

$$W_c SiO_{\frac{4-c}{2}} \qquad (2)$$

    dans laquelle W a la même signification que ci-dessus et c a une valeur comprise entre 0 et 3.

11. Utilisation selon la revendication 10, **caractérisée en ce que** le polyorganosiloxane de type A est choisi parmi :

    - les diméthylpolysiloxanes à extrémités hydrogénodiméthylsilyles,

- les copolymères diméthylhydrogénométhylpolysiloxanes à extrémités triméthylsilyles,
- les copolymères diméthylhydrogénométhylpolysiloxanes à extrémités hydrogénodiméthylsilyles,
- les hydrogénométhylpolysiloxanes à extrémités triméthylsilyles, et
- les hydrogénométhylpolysiloxanes cycliques.

**12.** Utilisation selon l'une des revendications 9 à 11, **caractérisée en ce que** le polyorganosiloxane de type B est choisi parmi les polyorganosiloxanes comprenant des motifs semblables ou différents de formule (3) :

$$W'_d Y_e SiO_{\frac{4-(d+e)}{2}} \qquad (3)$$

dans laquelle :

- les symboles W , semblables et/ou différents, représentent:

  · un radical alkyle linéaire ou ramifié contenant 1 à 18 atomes de carbone, éventuellement substitué par au moins un halogène,
  · un radical cycloalkyle contenant entre 5 et 8 atomes de carbone cycliques, éventuellement substitué par au moins un halogène,
  · un radical aryle contenant entre 6 et 12 atomes de carbone pouvant être substitué éventuellement sur la partie aryle par au moins un atome d'halogène, ou un groupement alkyle et/ou alkoxyle contenant 1 à 3 atomes de carbone,
  · une partie arylalkyle ayant une partie alkyle contenant entre 5 et 14 atomes de carbone et une partie aryle contenant entre 6 et 12 atomes de carbone, substituée éventuellement sur la partie aryle par au moins un atome d'halogène, ou un groupement alkyle et/ou alkoxyle contenant 1 à 3 atomes de carbone,

- les symboles Y sont semblables ou différents et représentent un reste alcényle linéaire ou ramifié en $C_1$-$C_{12}$, et présentant au moins une insaturation éthylénique en extrémité de chaîne et/ou dans la chaîne et éventuellement au moins un hétéroatome ;
- e est égal à 1 ou 2, d est égal à 0, 1 ou 2 avec la somme (d +e) ayant une valeur comprise entre 1 et 3;

  * éventuellement d'autres motifs de formule moyenne (2'):

$$W'_c SiO_{\frac{4-c}{2}} \qquad (2')$$

dans laquelle W' a la même signification que ci-dessus et c a une valeur comprise entre 0 et 3.

**13.** Utilisation selon l'une des revendications 9 à 12, **caractérisée en ce que** le revêtement silicone dérive de la polymérisation et/ou réticulation d'au moins un polyorganosiloxane de type A et d'au moins un polyorganosiloxane de type B en quantité telle que le rapport molaire Si-H / groupement insaturé réactif est compris entre 0,4 et 10.

**14.** Utilisation selon l'une des revendications 9 à 13, **caractérisée en ce que** le revêtement silicone comprend en outre un catalyseur de type complexe thermosensible du platine.

**15.** Utilisation selon l'une des revendications 9 à 14, **caractérisée en ce que** le revêtement silicone contient en outre un inhibiteur de la réaction.

**16.** Utilisation selon l'une des revendications 1 à 8, **caractérisée en ce que** le revêtement silicone dérive de la polymérisation et/ou réticulation d'au moins un polyorganosiloxane de type A ayant par molécule au moins un motif structural Si-H réactif et d'au moins un polyorganosiloxane de type C ayant par molécule au moins un motif structural Si-OH réactif.

**17.** Utilisation selon la revendication 15 ou 16, **caractérisée en ce que** le polyorganosiloxane de type C est choisi parmi les polyorganosiloxanes comportant :

* des motifs de formule (4) suivante :

$$(OH)_f W''_g SiO_{\frac{4-(f+g)}{2}} \quad (4)$$

dans laquelle :

- les symboles W'', semblables ou différents, représentent :

un radical alkyle linéaire ou ramifié contenant 1 à 18 atomes de carbone, éventuellement substitué par au moins un halogène,

· un radical cycloalkyle contenant entre 5 et 8 atomes de carbone cycliques, éventuellement substitué par au moins un halogène,
· un radical aryle contenant entre 6 et 12 atomes de carbone pouvant être substitué éventuellement sur la partie aryle par au moins un atome d'halogène, ou un groupement alkyle et/ou alkoxyle contenant 1 à 3 atomes de carbone,
· une partie arylalkyle ayant une partie alkyle contenant entre 5 et 14 atomes de carbone et une partie aryle contenant entre 6 et 12 atomes de carbone, substituée éventuellement sur la partie aryle par au moins un atome d'halogène, ou un groupement alkyle et/ou alkoxyle contenant 1 à 3 atomes de carbone,

- a est 1 ou 2, b est 0, 1 ou 2, avec la somme (a+b) ayant une valeur comprise entre 1 et 3,
- f est 1 ou 2, g est 0, 1 ou 2, avec la somme (f+g) ayant une valeur comprise entre 1 et 3,

et éventuellement d'autres motifs de formule ("2")

$$W''_c SiO_{\frac{4-c}{2}} \quad (2")$$

dans laquelle W'' a la même signification que ci-dessus et c a une valeur comprise entre 0 et 3.

**18.** Utilisation selon l'une des revendications 15 à 17, **caractérisée en ce que** les polyorganosiloxanes de type A utilisés comportent de 1 à 50 motifs Si-H par molécule et/ou les polyorganosiloxanes de type C utilisés comportent de 1 à 50 motifs Si-OH par molécule.

**19.** Utilisation selon l'une des revendications 1 à 8, **caractérisée en ce que** le revêtement silicone dérive de la polymérisation et/ou réticulation d'au moins un polyorganosiloxane de type A ayant par molécule au moins un radical Si-H réactif et exempte d'atome de silicium lié à plus de deux atomes d'hydrogène et d'au moins un polyorganosiloxane de type D portant au moins un motif de type époxy, oxétane et/ou dioxolane réactif.

**20.** Utilisation selon la revendication 19, **caractérisée en ce que** le polyorganosiloxane de type D est choisi parmi les polyorganosiloxanes comportant:

* des motifs de formule suivante (5):

$$Z_h W'''_i SiO_{\frac{4-(h+i)}{2}} \quad (5)$$

dans laquelle :

- les symboles W''', semblables et/ou différents, représentent

. un radical alkyle linéaire ou ramifié contenant 1 à 18 atomes de carbone, éventuellement substitué par au moins un atome d'halogène,

. un radical cycloalkyle contenant entre 5 et 8 atomes de carbone cycliques, éventuellement substitué par au moins un atome d'halogène,
· un radical aryle contenant entre 6 et 12 atomes de carbone pouvant être substitué éventuellement sur la partie aryle par au moins un atome d'halogène, un groupement alkyle et/ou alkoxyle contenant 1 à 3 atomes de carbone,
· une partie arylalkyle ayant une partie alkyle contenant entre 5 et 14 atomes de carbone et une partie aryle contenant entre 6 et 12 atomes de carbone, substituée éventuellement sur la partie aryle par au moins un atome d'halogène, un groupement alkyle et/ou alkoxyle contenant 1 à 3 atomes de carbone.

- a est 1 ou 2, b est 0, 1 ou 2, avec la somme (a+b) ayant une valeur comprise entre 1 et 3.
- les symboles Z sont semblables ou différents et représentent :

· un groupement W''',
· un radical hydrogène,
· et/ou un groupement époxyfonctionnel, oxétanefonctionnel, · dioxolanefonctionnel et/ou alcénylétherfonctionnel, relié au silicium du polyorganosiloxane par l'intermédiàire d'un radical divalent contenant de 2 à 20 atomes de carbone et
pouvant contenir au moins un hétéroatome, de préférence de l'oxygène,
· avec l'un au moins des symboles Z représentant un groupement organique fonctionnel réticulable.

- h est égal à 1 ou 2, i est égale à 0,1 ou 2 avec la somme (h+i) ayant une valeur comprise entre 1 et 3.

* éventuellement d'autres motifs de formule (2''')

$$W'''_c SiO_{\frac{4-c}{2}} \quad (2''')$$

dans laquelle W''' a la même signification que ci-dessus et c a une valeur comprise entre 0 et 3.

**21.** Utilisation selon la revendication 20, **caractérisée en ce que** les polyorganosiloxanes de type D comportent de 3 à 10 groupements organofonctionnels par chaîne macromoléculaire.

**22.** Utilisation selon l'une des revendications 16 à 21, **caractérisée en ce que** le polyorganosiloxane de type A à motif structural Si-H réactif est choisi parmi les polyorganohydrogénosiloxanes définis en revendication 10 ou 11.

**23.** Utilisation selon l'une des revendications précédentes, **caractérisée en ce que** dans le revêtement silicone, les points de réticulation sont figurés par des liaisons alkyles ou alcényles le cas échéant interrompus par des hétéroatomes, des liaisons siloxanes, ou des liaisons de type éthersilylé.

**24.** Utilisation selon l'une des revendications précédentes, **caractérisée en ce que** le revêtement adhésif dérive d'une émulsion adhésive sensible à la pression dérivant de polymères acryliques.

**25.** Utilisation selon la revendication 24, **caractérisée en ce que** les émulsions adhésives sensibles à la pression sont obtenues par polymérisation majoritairement de monomères acrylates présents à raison de 50 à environ 90 % et de préférence à raison de 80 à 99 % en poids et le cas échéant de monomères radicalaires copolymérisables.

**26.** Utilisation selon la revendication 25, **caractérisée en ce que** les monomères sont choisis dans le groupe constitué :

- des esters(méth)acryliques comme les esters de l'acide acrylique et de l'acide méthacrylique avec les alcanols en $C_1$-$C_{12}$ hydrogénés ou fluorés, de préférence $C_1$-$C_8$, notamment l'acrylate de méthyle, l'acrylats d'éthyle, l'acrylate de propyle, l'acrylate de n-butyle, l'acrylate d'isobutyle, l'acrylate de 2-éthylehexyle, l'acrylate de tert-butyle, l'acrylate d'hexyle, l'acrylate d'heptyle, l'acrylate d'octyle, l'acrylate d'iso-octyle, l'acrylate de décyle, l'acrylate de dodécyle, le méthacrylate de méthyle, le méthacrylate d'éthyle, le méthacrylate de n-butyle, le méthacrylate d'isobutyle ;

- des nitriles vinyliques dont plus particulièrement ceux ayant de 3 à 12 atomes de carbone, comme en particulier l'acrylonitrile et le méthacrylonitrile ;

- des esters vinyliques d'acide carboxylique comme l'acétate de vinyle, le versatate de vinyle, le propionate de vinyle.

- des acides mono- et di- carboxyliques insaturés éthyléniques comme l'acide acrylique, l'acide méthacrylique, l'acide itaconique, l'acide maléique, l'acide fumarique et les mono- et di- alkylesters des acides mono- et di-carboxyliques du type cité avec les alcanols ayant de préférence 1 à 8 atomes de carbone et leurs dérivés N-substitués,

- des amides des acides carboxyliques insaturés comme l'acrylamide, le méthacrylamide, le N-méthylolacrylamide ou méthacrylamide, les N-alkylacrylamides,

- des monomères éthyléniques comportant un groupe acide sulfonique et ses sels alcalins ou d'ammonium par exemple l'acide vinylsulfonique, l'acide vinylbenzènesulfonique, l'acide alpha-acrylamido méthylpropane-sulfonique, le 2-sulfoéthylène-méthacrylate,

- des monomères éthyléniques insaturés comportant un groupe amino secondaire, tertiaire ou quaternaire, ou un groupe hétérocyclique contenant de l'azote tel que par exemple les vinylpyridines, le vinylimidazole, les (méth)acrylates d'aminoalkyle et les (méth)acrylamides d'aminoalkyle comme le diméthylaminoéthyl-acrylate ou diméthylaminoéthyl-méthacrylate, le ditertiobutylaminoéthyl-acrylate ou le ditertiobutylaminoéthyl-méthacrylate, le diméthylaminométhyl-acrylamide ou diméthylaminométhyl-méthacrylamide.

- des monomères zwitterioniques comme par exemple l'acrylate de sulfopropyl(diméthyl)aminopropyle,

- des monomères éthyléniques portant un groupement sulfate,

- des monomères éthyléniques portant une ou plusieurs fonction(s) phosphate et/ou phosphonate,

- et leurs mélanges.

27. Utilisation selon l'une des revendications 1 à 15 et 24 à 26, **caractérisée en ce que** le revêtement dérive de la polymérisation et/ou réticulation d'une huile silicone portant des groupements Si-H réactifs avec une huile silicone portant des groupements Si-CH=CH$_2$ réactifs.

## Patentansprüche

1. Verwendung eines organischen oder silikonierten Acryl- oder Alkenyletherderivats als Additiv zur Regulierung der Abziehkraft einer Silikon/Klebstoff-Grenzschicht bei einem Silikon/Klebstoff-Komplex, der wenigstens eine auf einen ersten Träger aufgebrachte Silikonbeschichtung und eine auf einen zweiten Träger aufgebrachte Klebstoffbeschichtung umfaßt, **dadurch gekennzeichnet, daß** die Silikonbeschichtung aus der thermischen Polymerisation und/oder Vernetzung:

- entweder wenigstens eine reaktionsfähige Si-H-Struktureinheit tragender Monomeren, Oligomeren und/oder Polymeren und wenigstens eine reaktionsfähige, ungesättigte, aliphatische Gruppe tragender Monomeren, Oligomeren und/oder Polymeren,
- oder wenigstens eine reaktionsfähige Si-H-Struktureinheit tragender Monomeren, Oligomeren und/oder Polymeren und wenigstens eine reaktionsfähige Si-OH-Einheit tragender Monomeren, Oligomeren und/oder Polymeren,
- oder wenigstens eine reaktionsfähige Si-H-Struktureinheit tragender Monomeren, Oligomeren und/oder Polymeren und wenigstens eine reaktionsfähige Einheit des Epoxy-, Oxetan- und/oder Dioxolantyps tragender Monomeren, Oligomeren und/oder Polymeren herrührt

und **dadurch**, daß die Aktivität des Additivs photochemisch induziert wird und modulierbar ist.

2. Verwendung gemäß Anspruch 1, **dadurch gekennzeichnet, daß** die beiden Träger aus zwei getrennten Einheiten bestehen, die so angeordnet sind, daß die Silikonbeschichtung des ersten Trägers mit der Klebstoffbeschichtung des zweiten Trägers in Kontakt steht.

3. Verwendung gemäß Anspruch 1, **dadurch gekennzeichnet, daß** die beiden Träger jeweils aus allen beiden Seiten derselben Einheit bestehen.

4. Verwendung gemäß einem der Ansprüche 1 bis 3, **dadurch gekennzeichnet, daß** die Aktivität des Additivs zur Regulierung der Abziehkraft durch Aussetzen wenigstens einer Silikon/Klebstoff-Grenzschicht wenigstens einer UV-Bestrahlung initiiert und moduliert wird.

5. Verwendung gemäß einem der Ansprüche 1 bis 4, **dadurch gekennzeichnet, daß** das Additiv zur Regulierung der Abziehkraft ein organisches Acrylmaterial ist, ausgewählt aus Acrylatarten und insbesondere epoxidierten Acrylaten, Acrylglyceropolyestern, multifunktionellen Acrylaten, Acrylpolyurethanen, Acrylpolyethern, Acrylpolyestern, ungesättigten Polyestern und Acrylacrylmaterialien.

6. Verwendung gemäß einem der Ansprüche 1 bis 4, **dadurch gekennzeichnet, daß** das Additiv zur Regulierung der Abziehkraft ein Acrylsilikon ist und/oder Alkenyletherfunktionen aufweist.

7. Verwendung gemäß Anspruch 6, **dadurch gekennzeichnet, daß** die Acrylsilikone aus den Polyorganosiloxanen mit einer Arrylat- und/oder Methacrylatfunktion, die durch eine Si-C-Bindung an die Polysiloxainkette gebunden ist, ausgewählt sind.

8. Verwendung gemäß eines der vorangehenden Ansprüche, **dadurch gekennzeichnet, daß** das Additiv zur Regulierung der Abziehkraft in einer Menge von 0,1 bis 20 Gew.-% der gesamten Silikonmischung eingesetzt wird.

9. Verwendung gemäß eines der vorangehenden Ansprüche, **dadurch gekennzeichnet, daß** die Silikonbeschichtung aus der Polymerisation und/oder Vernetzung wenigstens eines Polyorganosiloxans des Typs A, das je Molekül wenigstens einen reaktionsfähigen Si-H-Rest besitzt und frei von einem an mehr als zwei Wasserstoffatome gebundenen Siliziumatom ist wenigstens eines Polyorganosiloxans des Typs B, das je Molekül wenigstens eine reaktionsfähige, ungesättigte, aliphatische Gruppe aufweist, herrührt.

10. Verwendung gemäß Anspruch 9, **dadurch gekennzeichnet, daß** das Polyorganosiloxan des Typs A ein Polyorganohydrogensiloxan ist, umfassend:

   * Einheiten der folgenden Formel in der:

   - die Symbole W gleich und/oder verschieden Folgendes darstellen:

   · einen geraden oder verzweigten, 1 bis 18 Kohlenstoffatome enthaltenden Alkylrest, der gegebenenfalls durch wenigstens ein Halogen substituiert ist,
   · einen 5 bis 8 Ringkohlenstoffatome enthaltenden Cycloalkylrest, der gegebenenfalls durch wenigstens ein Halogen substituiert ist,
   · einen 6 bis 12 Kohlenstoffatome enthaltenden Arylrest, der gegebenenfalls im Arylteil durch wenigstens ein Halogenatom oder eine 1 bis 3 Kohlenstoffatome enthaltende Alkyl- und/oder Alkoxygruppe substituiert sein kann,
   · einen Arylalkylteil, der einen 5 bis 14 Kohlenstoffatome enthaltenden Alkylteil und einen 6 bis 12 Kohlenstoffatome enthaltenden Arylteil besitzt und gegebenenfalls im Arylteil durch wenigstens ein Halogenatom oder eine 1 bis 3 Kohlenstoffatome enthaltende Alkyl- und/oder Alkoxygruppe substituiert ist,

   - a 1 oder 2 ist, b 0, 1 oder 2 ist, wobei die Summe (a+b) einen Wert zwischen 1 und 3 besitzt und

   * gegebenenfalls andere Einheiten der Durchschnittsformel (2):

$$W_c SiO_{\frac{4-c}{2}} \qquad (2)$$

in der W dieselbe Bedeutung wie oben aufweist und c einen Wert zwischen 0 und 3 besitzt.

11. Verwendung gemäß Anspruch 10, **dadurch gekennzeichnet, daß** das Polyorganosiloxan des Typs A ausgewählt ist aus:

- den Dimethylpolysiloxanen mit Hydrogendimethylsilylenden,
- den Dimethylhydrogenmethylpolysiloxan-Copolymeren mit Trimethylsilylenden,
- den Dimethylhydrogenmethylpolysiloxan-Copolymeren mit Hydrogendimethylsilylenden,
- den Hydrogenmethylpolysiloxanen mit Trimethylsilylenden und
- den cyclischen Hydrogenmethylpolyrsiloxanen.

**12.** Verwendung gemäß einem der Ansprüche 9 bis 11, **dadurch gekennzeichnet, daß** das Polyorganosiloxan des Typs B aus den Polyorganosiloxanen ausgewählt ist, umfassend gleiche oder verschiedene Einheiten der Formel (3):

$$W_d Y_e SiO_{\frac{4-(d+e)}{2}} \qquad (3)$$

in der:

- die Symbole W gleich und/oder verschieden Folgendes darstellen:

· einen geraden oder verzweigten, 1 bis 18 Kohlenstoffatome enthaltenden Alkylrest, der gegebenenfalls durch wenigstens ein Halogen substituiert ist,
· einen 5 bis 8 Ringkohlenstoffatome enthaltenden Cycloalkylrest, der gegebenenfalls durch wenigstens ein Halogen substituiert ist,
· einen 6 bis 12 Kohlenstoffatome enthaltenden Arylrest, der gegebenenfalls im Arylteil durch wenigstens ein Halogenatom oder eine 1 bis 3 Kohlenstoffatome enthaltende Alkyl- und/oder Alkoxygruppe substituiert sein kann,
· einen Arylalkylteil, der einen 5 bis 14 Kohlenstoffatome enthaltenden Alkylteil und einen 6 bis 12 Kohlenstoffatome enthaltenden Arylteil besitzt und gegebenenfalls im Arylteil durch wenigstens ein Halogenatom oder eine 1 bis 3 Kohlenstoffatome enthaltende Alkyl- und/oder Alkoxygruppe substituiert ist,

- die Symbole Y gleich oder verschieden sind und einen geraden oder verzweigten $C_1$-$C_{12}$-Alkenylrest darstellen und wenigstens eine ethylenische Ungesättigtheit am Kettenende und/oder in der Kette und gegebenenfalls wenigstens ein Heteroatom aufweisen,
- e gleich 1 oder 2 ist, d gleich 0, 1 oder 2 ist, wobei die Summe (d+e) einen Wert zwischen 1 und 3 besitzt und

\* gegebenenfalls andere Einheiten der Durchschnittsformel (2'):

$$W'_c SiO_{\frac{4-c}{2}} \qquad (2')$$

in der W' dieselbe Bedeutung wie oben besitzt und c einen Wert zwischen 0 und 3 besitzt.

**13.** Verwendung gemäß einem der Ansprüche 9 bis 12, **dadurch gekennzeichnet, daß** die Silikonbeschichtung aus der Polymerisation und/oder Vernetzung wenigstens eines Polyorganosiloxans des Typs A und wenigstens eines Polyorganosnoxans des Typs B in einer solchen Menge, daß das Molverhältnis Si-H/reaktionsfähige, ungesättigte Gruppe zwischen 0,4 und 10 ist, herrührt.

**14.** Verwendung gemäß einem der Ansprüche 9 bis 13, **dadurch gekennzeichnet, daß** die Silikonbeschichtung außerdem einen Katalysator vom Typ eines wärmeempfindlichen Platinkomplexes umfaßt.

**15.** Verwendung gemäß einem der Ansprüche 9 bis 14, **dadurch gekennzeichnet, daß** die Silikonbeschichtung außerdem einen Reaktionsinhibitor enthält.

**16.** Verwendung gemäß einem der Ansprüche 1 bis 8, **dadurch gekennzeichnet, daß** die Silikonbeschichtung aus der Polymerisation und/oder Vernetzung wenigstens eines Polyorganosiloxans des Typs A, das je Molekül wenigstens eine reaktionsfähige Si-H-Struktureinheit besitzt und wenigstens eines Polyorganosiloxans des Typs C, das je Molekül wenigstens eine reaktionsfähige Si-OH-Struktureinheit besitzt, herrührt.

17. Verwendung gemäß Anspruch 15 oder 16, **dadurch gekennzeichnet, daß** das Polyorganosiloxan des Typs C aus den Polyorganosiloxanen ausgewählt ist, umfassend:

   * Struktureinheiten der folgenden Formel (4):

$$(OH)_a W''_g SiO_{\frac{4-(f+g)}{2}} \quad (4)$$

in der:

   - die Symbole W'' gleich oder verschieden Folgendes darstellen:

      · einen geraden oder verzweigten, 1 bis 18 Kohlenstoffatome enthaltenden Alkylrest, der gegebenenfalls durch wenigstens ein Halogen substituiert ist,
      · einen 5 bis 8 Ringkohlenstoffatome enthaltenden Cycloalkylrest, der gegebenenfalls durch wenigstens ein Halogen substituiert ist,
      · einen 6 bis 12 Kohlenstoffatome enthaltenden Arylrest, der gegebenenfalls im Arylteil durch wenigstens ein Halogenatom oder eine 1 bis 3 Kohlenstoffatome enthaltende Alkyl- und/oder Alkoxygruppe substituiert sein kann,
      · einen Arylalkylteil, der einen 5 bis 14 Kohlenstoffatome enthaltenden Alkylteil und einen 6 bis 12 Kohlenstoffatome enthaltenden Arylteil besitzt und gegebenenfalls im Arylteil durch wenigstens ein Halogenatom oder eine 1 bis 3 Kohlenstoffatome enthaltende Alkyl- und/oder Alkoxygruppe substituiert ist,

   - a 1 oder 2 ist, b 0, 1 oder 2 ist, wobei die Summe (a+b) einen Wert zwischen 1 und 3 besitzt,
   - f 1 oder 2 ist, g 0, 1 oder 2 ist, wobei die Summe (f+g) einen Wert zwischen 1 und 3 besitzt

und gegebenenfalls andere Einheiten der Formel (2''):

$$W''_c SiO_{\frac{4-c}{2}} \quad (2'')$$

in der W'' dieselbe Bedeutung wie oben besitzt und c einen Wert zwischen 0 und 3 besitzt.

18. Verwendung gemäß einem der Ansprüche 15 bis 17, **dadurch gekennzeichnet, daß** die verwendeten Polyorganosiloxane des Typs A 1 bis 50 Si-H-Einheiten je Molekül enthalten und/oder die verwendeten Polyorganosiloxane des Typs C1 bis 50 Si-OH-Einheiten je Molekül enthalten.

19. Verwendung gemäß einem der Ansprüche 1 bis 8, **dadurch gekennzeichnet, daß** die Silikonbeschichtung aus der Polymerisation und/oder Vernetzung wenigstens eines Polyorganosiloxans des Typs A, das je Molekül wenigstens einen reaktionsfähigen Si-H-Rest besitzt und frei von einem an mehr als zwei Wasserstoffatome gebundenen Siliziumatom ist wenigstens eines Polyorganositoxans des Typs D, das wenigstens eine reaktionsfähige Einheit des Epoxy-, Oxetan- und/oder Dioxolantyps trägt, herrührt.

20. Verwendung gemäß Anspruch 19, **dadurch gekennzeichnet, daß** das Polyorganosiloxan des Typs D aus den Polyorganosiloxanen ausgewählt ist, umfassend:

   * Struktureinheiten der folgenden Formel (5):

$$Z_h W'''_j SiO_{\frac{4-(h+j)}{2}} \quad (5)$$

in der:

- die Symbole W''' gleich und/oder verschieden Folgendes darstellen:

· einen geraden oder verzweigten, 1 bis 18 Kohlenstoffatome enthaltenden Alkylrest, der gegebenenfalls durch wenigstens ein Halogen substituiert ist,
· einen 5 bis 8 Ringkohlenstoffatome enthaltenden Cycloalkylrest, der gegebenenfalls durch wenigstens ein Halogen substituiert ist,
· einen 6 bis 12 Kohlenstoffatome enthaltenden Arylrest, der gegebenenfalls im Arylteil durch wenigstens ein Halogenatom oder eine 1 bis 3 Kohlenstoffatome enthaltende Alkyl- und/oder Alkoxygruppe substituiert sein kann,
· einen Arylalkylteil, der einen 5 bis 14 Kohlenstoffatome enthaltenden Alkylteil und einen 6 bis 12 Kohlenstoffatome enthaltenden Arylteil besitzt und gegebenenfalls im Arylteil durch wenigstens ein Halogenatom oder eine 1 bis 3 Kohlenstoffatome enthaltende Alkyl- und/oder Alkoxygruppe substituiert ist,

- a 1 oder 2 ist, b 0, 1 oder 2 ist, wobei die Summe (a+b) einen Wert zwischen 1 und 3 besitzt,
- die Symbole Z gleich oder verschieden sind und Folgendes darstellen:

· eine Gruppe W''',
· einen Wasserstoffrest
· und/oder eine epoxyfunktionelle, oxetanfunktionelle, dioxolanfunktionelle und/oder alkenyletherfunktionelle Gruppe, die über einen zweiwertigen Rest, der 2 bis 20 Kohlenstoffatome enthält und wenigstens ein Heteroatom, vorzugsweise Sauerstoff enthalten kann, an das Silizium des Polyorganosiloxans gebunden ist,
· wobei wenigstens eines der Symbole Z eine vernetzbare organische funktionelle Gruppe darstellt,

- h gleich 1 oder 2 ist, i gleich 0, 1 oder 2 ist, wobei die Summe (h+i) einen Wert zwischen 1 und 3 besitzt,

\* gegebenenfalls andere Einheiten der Formel (2'''):

$$W'''_c SiO_{\frac{4-c}{2}} \quad (2''')$$

in der W''' dieselbe Bedeutung wie oben besitzt und c einen Wert zwischen 0 und 3 besitzt.

21. Verwendung gemäß Anspruch 20, **dadurch gekennzeichnet, daß** die Polyorganosiloxane des Typs D 3 bis 10 organafunktionelle Gruppen je makromolekulare Kette enthalten.

22. Verwendung gemäß einem der Ansprüche 16 bis 21, **dadurch gekennzeichnet, daß** das Polyorganosiloxan des Typs A mit der reaktionsfähigen Si-H-Struktureinheit aus den in Anspruch 10 oder 11 definierten Polyorganohydrogensiloxanen ausgewählt ist.

23. Verwendung gemäß einem der vorangehenden Ansprüche, **dadurch gekennzeichnet, daß** bei der Silikonbeschichtung die Vernetzungsstellen durch Alkyl- oder Alkenylbindungen dargestellt werden, die gegebenenfalls durch Heteroatome, Siloxanbindungen oder Bindungen des Silylethertyps unterbrochen sind.

24. Verwendung gemäß einem der vorangehenden Ansprüche, **dadurch gekennzeichnet, daß** die Klebstoffschicht aus einer Emulsion eines druckempfindlichen Klebstoffs herrührt, der aus Acrylpolymeren stammt.

25. Verwendung gemäß Anspruch 24, **dadurch gekennzeichnet, daß** die Emulsionen aus druckempfindlichen Klebstoffen hauptsächlich durch Polymerisation in einer Menge von 50 bis ungefähr 90 Gew.-% und bevorzugt in einer Menge von 80 bis 99 Gew.-% vorliegenden Acrylatmonomeren und gegebenenfalls radikalischer, copolymerisierbarer Monomeren erhalten werden.

26. Verwendung gemäß Anspruch 25, **dadurch gekennzeichnet, daß** die Monomeren aus der Gruppe ausgewählt sind, bestehend aus:

- (Meth)Acrylester wie Ester der Acrylsäure und der Methacrylsäure mit hydrierten oder fluorierten $C_1$-$C_{12}$-, vorzugsweise $C_1$-$C_8$-Alkanolen, insbesondere Methylacrylat, Ethylacrylat, Propylacrylat, n-Butylacrylat, Isobutylacrylat, 2-Ethylhexylacrylat, tert-Butylacrylat, Hexylacrylat, Heptylacrylat, Octylacrylat, Isooctylacrylat, Decylacrylat, Dodecylacrylat, Methylmethacrylat, Ethylmethacrylat, n-Butylmethacrylat, Isobutylmethacrylat,
- Vinylnitrile, unter ihnen insbesondere die mit 3 bis 12 Kohlenstoffatomen wie im besonderen Acrylnitril und Methacrylnitril,
- Carbonsäurevinylester wie Vinylacetat, Vinylversatat, Vinylpropionat,
- ethylenisch ungesättigte Mono- und Dicarbonsäuren wie Acrylsaure, Methacrylsäure, Itaconsäure, Maleinsäure, Fumarsäure und die Mono- und Dialkylester der Mono- und Dicarbonsäuren des angeführten Typs mit Alkanolen mit vorzugsweise 1 bis 8 Kohlenstoffatomen und ihre N-substituierten Derivate,
- ungesättigte Carbonsäureamide wie Acrylamid, Methacrylamid, N-Methylolacrylamid oder -methacrylamid, N-Alkyläcrylamide,
- Ethylenmonomeren, die eine Sulfonsäuregruppe enthalten, und ihre Alkali- oder Ammoniumsalze, zum Beispiel Vinylsulfonsäure, Vinylbenzolsulfonsäure, alpha-Acrylamidomethylpropansulfonsäure, 2-Sulfoethylenmethacrylat,
- ethylenisch ungesättigte Monomeren, die eine sekundäre, tertiäre oder quaternäre Aminogruppe oder eine stickstoffhaltige, heterocyclische Gruppe enthalten, wie etwa zum Beispiel Vinylpyridine, Vinylimidazol, Aminoalkyl(meth)-acrylate und Aminoalkyl(meth)acrylamide wie Dimethylaminoethylacrylat oder Dimethylaminoethylmethacrylat, Di-t-butylaminoethylacrylat oder Di-tert-butylaminoethylmethacrylat, Dimethylaminomethylacrylamid oder Dimethylaminomethylmethacrylamid,
- zwitterionische Monomeren wie zum Beispiel Sulfopropyl(dimethyl)aminopropyl-acrylat,
- eine Sulfatgruppe tragende Ethylenmonomeren,
- eine oder mehr Phosphat- und/oder Phosphonatfunktion (en) tragende Ethylenmonomeren,
- und ihre Gemische.

27. Verwendung gemäß einem der Ansprüche 1 bis 15 und 24 bis 26, **dadurch gekennzeichnet, daß** die Beschichtung aus der Polymerisation und/oder Vernetzung eines reaktionsfähige Si-H-Gruppen tragenden Silikonöls mit einem reaktionsfähige Si-CH=$CH_2$-Gruppen tragenden Silikonöl herrührt.

**Claims**

1. Use of an acrylic or organic or silicone alkenylether derivative as an additive for modifying the peeling force of a silicone/adhesive interface in a silicone/adhesive complex which includes at least one silicone coating applied to a first support and an adhesive coating applied to a second support, **characterised by** the fact that the said silicone coating is derived from the thermal polymerisation and/or cross-linking of:

- either monomers, oligomers and/or polymers which possess at least one reactive Si-H structural unit and monomers, oligomers and/or polymers which possess at least one reactive unsaturated aliphatic group.
- or monomers, oligomers and/or polymers which possess at least one reactive Si-H structural unit and monomers, oligomers and/or polymers which possess at least one reactive Si-OH unit.
- or monomers, oligomers and/or polymers which possess at least one reactive Si-H structural unit and monomers, oligomers and/or polymers which possess at least one reactive epoxy, oxetane and/or dioxolane unit,

and for which the activity of the aforementioned additive is photochemically initiated and controlled.

2. Use as described in claim 1, **characterised by** the fact that the two supports are formed from two distinct entities, arranged so that the silicone coating of the first support is in contact with the adhesive coating of the second support.

3. Use as described in claim 1, **characterised by** the fact that the two supports are respectively formed by each of the two faces of a single entity.

4. Use as described in one of claims 1 to 3, **characterised by** the fact that the activity of the additive for modifying the peeling force is initiated and controlled by the exposure of at least the silicone/adhesive interface to at least one UV irradiation.

5. Use as described in one of claims 1 to 4, **characterised by** the fact that the aforementioned additive for modifying the peeling force is an organic acrylic selected from the acrylate species, in particular epoxy acrylates, acrylo-glycero-polyesters, multifunctional acrylates, acrylo-urethanes, acrylo-polyethers, acrylo-polyesters, unsaturated polyesters and acrylo-acrylates.

6. Use as described in one of claims 1 to 4, **characterised by** the fact that the aforementioned additive for modifying the peeling force is an acrylic silicone and/or a silicone with alkenylether functions.

7. Use as described in claim 6, **characterised by** the fact that the acrylic silicones are selected from amongst polyorganosiloxanes with acrylate and/or methacrylate functions linked to the polysiloxane chain by a Si-C bond.

8. Use as described in one of the preceding claims, **characterised by** the fact that the aforementioned additive for modifying the peeling force is used at a level of from 0.1 to 20% by weight of the total silicone mixture.

9. Use as described in any of the preceding claims, **characterised by** the fact that the silicone coating is derived from the polymerisation and/or cross-linking of at least one polyorganosiloxane of type A which has at least one reactive Si-H radical per molecule and which has no silicon atoms linked to more than two atoms of hydrogen, and at least one polyorganosiloxane of type B which possesses at least one reactive unsaturated aliphatic group per molecule.

10. Use as described in claim 9, **characterised by** the fact that the polyorganosiloxane of type A is a polyorganohydrogansiloxane which includes;

   *structures with the following formula

$$H_a W_b SiO_{\frac{4-(a+b)}{2}} \qquad (1)$$

   in which:

   - the symbols W, alike and/or different, represent
   - a linear or cross-linked alkyl radical which contains 1 to 18 carbon atoms, perhaps substituted by at least one halogen,
   - a cycloalkyl radical containing between 5 and 8 cyclic carbon atoms, possibly substituted by at least one halogen,
   - an aryl radical containing between 6 and 12 atoms of carbon which could possibly be substituted on the aryl part by at least one halogen atom, or an alkyl and/or alkoxyl group containing 1 to 3 atoms of carbon,
   - an arylalkyl part which has an alkyl part containing between 5 and 14 carbon atoms and an aryl part containing between 6 and 12 carbon atoms, perhaps substituted on the aryl part by at least one halogen atom or an alkyl and/or alkoxyl group containing 1 to 3 atoms of carbon,

   - a is 1 or 2, b is 0, 1 or 2, with the sum (a+b) having a value of between 1 and 3, and
   * possibly other structures of average formula (2):

$$W_c SiO_{\frac{4-c}{2}} \qquad (2)$$

   in which W has the same significance as above and c has a value of between 0 and 3.

11. Use as described in claim 10, **characterised by** the fact that the polyorganosiloxane of type A is selected from amongst

   - hydrogenodimethylsilyl-terminated dimethylpolysiloxanes,
   - trimethylsilyl-terminated dimethylhydrogenmethylpolysiloxaae copolymers, - hydrogenodimethylsilyl-terminated dimethylhydrogenmethylpolysiloxane copolymers,
   - trimethylsilyl-terminated hydrogenomethylpolysiloxanes, and

- cyclic hydrogenomethylpolysiloxanes.

**12.** Use as described in one of claims 9 to 11, **characterised by** the fact that the polyorganosilaxane of type B is selected from amongst polyorganosiloxanes which contain the same or different structures of formula (3)

$$W'_d Y_c SiO_{\frac{4-(d+e)}{2}} \quad (3)$$

in which:

- the symbols W', the same or different, represent;
- a linear or cross-linked alkyl radical containing 1 to 18 carbon atoms, possibly substituted by at least one halogen,
- a cycloalkyl radical containing between 5 and 8 cyclic carbon atoms, possibly substituted by at least one halogen,
- an aryl radical containing between 6 and 12 atoms of carbon which could possibly be substituted on the aryl part by at least one halogen atom, or an alkyl and/or alkoxyl group containing 1 to 3 atoms of carbon,
- an arylalkyl part which has an alkyl part containing between 5 and 14 carbon atom and an aryl part containing between 6 and 12 carbon atoms, perhaps substituted on the aryl part by at least one halogen atom or an alkyl and/or alkoxyl group containing 1 to 3 atoms of carbon,
- the symbols Y are the same or different and represent a remainder which is linear or cross-linked at $C_1$ - $C_{12}$, and which possesses at least one ethylenic unsaturation at the end of the chain and/or in the chain and possibly at least one heteroatom;
- e is equal to 1 or 2, d is equal to 0, 1 or 2, with the sum (d+e) having a value of between 1 and 3;

* possibly other structures of average formula (2');

$$W'_c SiO_{\frac{4-c}{2}} \quad (2')$$

in which W' has the same significance as above and c has a value of between 0 and 3.

**13.** Use as described in one of claims 9 to 12, **characterised by** the fact that the silicone coating is derived from the polymerisation and/or cross-linking of at least one polyorganosiloxane of type A and at least one polyorganosiloxane of type B in quantities such that the molar ratio Si-H / reactive unsaturated group is between 0.4 and 10.

**14.** Use as described in one of claims 9 to 13, **characterised by** the fact that the silicone coating also includes a thermo-sensitive platinum complex type catalyst.

**15.** Use as described in one of claims 9 to 14, **characterised by** the fact that the silicone coating also contains an inhibitor for the reaction,

**16.** Use as described in one of claims 1 to 8, **characterised by** the fact that the silicone coating is derived from the polymerisation and/or cross-linking of at least one polyorganosiloxane of type A which has at least one reactive Si-H structural unit per molecule and at least one polyorganosiloxane of type C which has at least one reactive Si-OH structural unit per molecule.

**17.** Use as described in claim 15 or 16, **characterised by** the fact that the polyorganosiloxane of type C is selected from amongst polyorganosiloxanes which contain:

*structures with the following formula (4):

$$(OH)_f W''_g SiO_{\frac{4-(f+g)}{2}} \qquad (4)$$

in which:

- the symbols W'', the same or different, represent;
- a linear or cross-linked alkyl radical containing 1 to 18 carbon atoms, possibly substituted by at least one halogen,
- a cycloalkyl radical containing between 5 and 8 cyclic carbon atoms, possibly substituted by at least one halogen,
- an aryl radical containing between 6 and 12 atoms of carbon which could possibly be substituted on the aryl part by at least one halogen atom, or an alkyl and/or alkoxyl group containing 1 to 3 atoms of carbon,
- an arylalkyl part which has an alkyl part containing between 5 and 14 carbon atom and an aryl part containing between 6 and 12 carbon atoms, perhaps substituted on the aryl part by at least one halogen atom or an alkyl and/or alkoxyl group containing 1 to 3 atoms of carbon,
- a is 1 or 2, b is 0, 1 or 2, with the sum (a+b) having a value of between 1 and 3,
- f is 1 or 2, g is 0, 1 or 2, with the sum (f+g) having a value of between 1 and 3,

and possibly other structures of formula (2")

$$W''_c SiO_{\frac{4-c}{2}} \qquad (2'')$$

in which W" has the same significance as above and c has a value of between 0 and 3.

18. Use as described in one of claims 15 to 17, **characterised by** the fact that the polyorganosiloxanes of type A used contain from 1 to 50 Si-H units per molecule and/or the polyorganosiloxanes of type C used include from 1 to 50 Si-OH units per molecule.

19. Use as described in one of claims 1 to 8, **characterised by** the fact that the silicone coating is derived from the polymerisation and/or cross-linking of at least one polyorganosiloxane of type A which has at least one reactive Si-H radical per molecule and has no silicon atoms linked to more than two hydrogen atoms and at least one polyorganosiloxane of type D which possesses at least one reactive epoxy, oxetane and/or dioxolane type unit.

20. Use as described in claim 19, **characterised by** the fact that the polyorganosiloxane of type D is selected from amongst polyorganosiloxanes which contain:

   *units with the following formula (5):

$$Z_h W'''_i SiO_{\frac{4-(h+i)}{2}} \qquad (5)$$

in which:

- the symbols W''', the same or different, represent;
- a linear or cross-linked alkyl radical containing 1 to 18 carbon atoms, possibly substituted by at least one halogen atom,
- a cycloalkyl radical containing between 5 and 8 cyclic carbon atoms, possibly substituted by at least one halogen atom,
- an aryl radical containing between 6 and 12 atoms of carbon which could possibly be substituted on the aryl part by at least one halogen atom, an alkyl and/or an alkoxyl group containing 1 to 3 atoms of carbon,
- an arylalkyl part which has an alkyl part containing between 5 and 14 carbon atom and an aryl part containing between 6 and 12 carbon atoms, perhaps substituted on the aryl part by at least one halogen atom, an alkyl and/or alkoxyl group containing 1 to 3 atoms of carbon.

- a is 1 or 2, b is 0, 1 or 2, with the sum (a+b) having a value of between 1 and 3.
- the symbols Z are the same or different and represent:

  - a W''' group,
  - a hydrogen radical,
  - and/or an epoxy functional, oxetane functional, dioxolane functional and/or alkenylether functional group, linked to the silicon of the polyorganosiloxane by means of a divalent radical containing 2 to 20 atoms of carbon and which could contain at least one heteroatom, preferably oxygen,
  - with at least one of the symbols Z representing a cross-linkable organic functional group,

- h is equal to 1 or 2, i is 0, 1 or 2, with the sum (h+i) having a value of between 1 and 3.

\* possibly other structures of formula (2''')

$$W'''_c SiO_{\frac{4-c}{2}} \qquad\qquad (2''')$$

in which W''' has the same significance as above and c has a value of between 0 and 3.

21. Use as described in claim 20, **characterised by** the fact that the polyorganosiloxanes of type D possess from 3 to 10 organo-functional groups per macromolecular chain.

22. Use as described in one of claims 16 to 21, **characterised by** the fact that the polyorganosiloxane of type A with reactive Si-H structural units is selected from amongst polyorganosiloxanes defined in claims 10 or 11.

23. Use as described in one of the preceding claims, **characterised by** the fact that in the silicone coating the points of cross-linking are formed by alkyl or alkenyl links, where appropriate interrupted by heteroatoms, siloxane links or ethylsilyl-type links

24. Use as described in one of the preceding claims, **characterised by** the fact that the adhesive coating is derived from a pressure-sensitive adhesive emulsion which is derived from acrylic polymers.

25. Use as described in claim 24, **characterised by** the fact that the pressure-sensitive adhesive emulsions are obtained mostly by polymerisation of the acrylate monomers present at a level of 50 to about 90% and preferably at a level of 80 to 99% by weight and where relevant, of copolymerisable radical bearing monomers.

26. Use as described in claim 25, **characterised by** the fact that the monomers are selected from a group made up of:

   - (meth)acrylic esters such as esters of acrylic acid and methacrylic acid with $C_1$-$C_{12}$ (preferably $C_1$-$C_8$) hydrogenated or fluorinated alcanols, in particular methyl acrylate, ethyl acrylate, propyl acrylate, n-butyl acrylate, iso-butyl acrylate, 2-ethylhexyl acrylate, tert-butyl acrylate, hexyl acrylate, heptyl acrylate, octyl acrylate, iso-octyl acrylate, decyl acrylate, dodecyl acrylate, methyl methacrylate, ethyl methacrylate, n-butyl methacrylate, isobutyl methacrylate ;
   - vinylic nitriles particularly those having from 3 to 12 carbon atoms, such as, in particular, acrylonitrile and methacrylonitrile;
   - carboxylic acid vinyl esters such as vinyl acetate, vinyl versatate, vinyl propionate,
   - unsaturated ethylenic mono- and di-carboxylic acids such as acrylic acid, itaconic acid, methacrylic acid, itaconic acid, maleic acid, fumaric acid and mono- and di- alkylesters of mono- and di-carboxylic acids of the type stated with alcanols which preferably have 1 to 8 carbon atoms and their N-substituted derivatives,
   - amides of unsaturated carboxylic acids such as acrylamide, methacrylamide, N-methylolacrylamide or methacrylamide, the N-alkylacrylamides,
   - ethylenic monomers which include a sulfonic acid group and their alkaline or ammonium salts for example vinylsulfonic acid, vinylbenzene sulfonic acid, alpha-acrylamide methylpropane-sulfonic acid, 2-sulfoethylene-methacrylate.

- unsaturated ethylenic monomers containing a secondary, tertiary or quaternary amine group, or a heterocyclic group containing nitrogen such as for example vinylpyridines, vinylimidazole, aminoalkyl (meth)acrylates and aminoalkyl (meth)acrylamides such as dimethylaminoethyl-acrylate or dimethylaminoethylmethacrylate, di-tertiary butyl aminoethyl acrylate or di-tertiary butylaminoethylmethacrylate, dimethylaminomethylacrylamide or dimethylaminomethylmethacrylamide;
- zwitterionic monomers such as, for example, sulfopropyl (dimethyl) aminopropyl acrylate.
- ethylenic monomers containing a sulphate group,
- ethylenic monomers which contain one or more phosphate and/or phosphonate functions
- and mixtures of these,

27. Use as described in any of claims 1 to 15 and 24 to 26, **characterised by** the fact that the coating is derived from polymerisation and/or cross-linking of a silicone oil which has reactive Si-H groups with a silicone oil which has reactive Si-CH=CH$_2$ groups,

*FIG.1*

EP 1 242 553 B1

_**FIG.2**_